# EUROPEAN PATENT SPECIFICATION

(11) **EP 0 780 786 B1**
(45) Date of publication and mention of the grant of the patent: **03.09.2003**
(21) Application number: 96120370.0
(22) Date of filing: 18.12.1996
(51) Int. Cl.: G06K 15/00, G06F 3/12

(54) **Printing apparatus and a control method therefor**
Druckvorrichtung und Steuerungsverfahren dafür
Appareil d'impression et méthode de contrôle associée

(30) Priority: 18.12.1995 JP 32934995; 14.03.1996 JP 5794196; 26.03.1996 JP 6964596
(43) Date of publication of application: 25.06.1997
(60) Divisional application: 03013385.4
(73) Proprietor: SEIKO EPSON CORPORATION, Shinjuku-ku, Tokyo 163-0811 (JP)
(72) Inventor: Koakutsu, Naohiko, Suwa-shi, Nagano-ken, 392 (JP); Aruga, Kazuhisa, Suwa-shi, Nagano-ken, 392 (JP); Fukano, Kazuko, Suwa-shi, Nagano-ken, 392 (JP); Ito, Yoshikazu, Suwa-shi, Nagano-ken, 392 (JP); Minowa, Masahiro, Suwa-shi, Nagano-ken, 392 (JP); Oguchi, Asahiro, Suwa-shi, Nagano-ken, 392 (JP)
(74) Representative: Hoffmann, Eckart, Dipl.-Ing.

(56) References cited:
- EP-A- 0 608 106
- EP-A- 0 654 757

## Description

The present invention relates to a printer that executes a printing process based on commands and other data received from a host device, and relates specifically to a printer that interrupts the printing process until consumable materials which have been depleted are replenished.

The standard configuration for the data input/output device, host device, and printer in the Point-of-Sale/Electronic Cash Register (POS/ECR) field has conventionally been an integrated, stand-alone system. In more recent years, however, faster data processing and more flexible system architectures have led to the development and wide-spread acceptance of distributed systems in which the data input/output device, host device, and printer are separated from each other and can be used in separate locations.

The printers used in such distributed systems are generally called "terminal printers." An example of a POS/ECR system using such a terminal printer in a restaurant or other food service business is described below.

The printer used in such an application is referred to herein as a "kitchen printer." When a waiter or waitress receives a customer order and enters the order into a hand-held data entry device, the order is transmitted immediately to a host device and printed on hard copy by the kitchen printer located in the kitchen. This system helps prevent errors because a person can process the order information while viewing the print content, thereby facilitating the management and processing of goods sold. These benefits have led to similar systems being introduced in a variety of businesses.

It is often the case, however, that cooking appliances, safety-related devices, or other more important equipment are given priority in the use of available space. This has increased the demand for compact printers with small space requirements. Unfortunately, compact printer designs limit the amount of consumable printing materials available on line, e.g., limit the size of paper rolls and the amount of ink in ink cartridges. This limitation is particularly bothersome in applications where the printer prints large volumes of information, resulting in consumable printer supplies being depleted frequently.

It is well known that the depletion of a roll of paper can be detected by using either a paper-out sensor that detects when there is no more paper on the roll or a near-end sensor that detects when there is very little paper left on the roll. Likewise, the depletion of ink in an ink cartridge can be monitored using a remaining-ink detector. When these consumable materials are depleted, it is common practice to immediately stop the printing process and cause the printer to enter an off-line state indicating to the host device that additional print data should not be transferred to the printer (EP-A-0 654 757). Loss of data sent from the host device is prevented in this case by notifying the host device that the printer is off-line.

When the host device is notified that the printer is off-line, an indicator can be flashed or a buzzer can be sounded to notify the operator that some or all consumable materials need replenishing. Once the consumable materials have been replenished, an on-line switch is pressed, either expressly or implicitly by some other action such as dosing the roll paper cover or ink cartridge cover, to switch the printer to the on line state and to notify the host device that the printer is again on-line and printing can be resumed. The operator must restore the printer to the on-line state and resume the printing process by either manually operating an on-line switch or alternatively, operating a switch when one of the above covers is closed.

In some situations, the printer should not be returned to the on-line state until after some other action is taken. For example, when the roll paper is replaced, it may also be necessary for the operator to operate a paper feed switch to advance a torn or discolored roll paper leader before resetting the printer to the on-line state. In the case of an ink jet printer, depending upon the type of ink cartridge used, ink build-up around the ink ejection nozzles may cause failure in ink ejection. In such cases, the operator should operate a switch after installing a new ink cartridge to flush out any ink build-up before returning the printer to the on-line state.

While the above examples specifically address roll paper and ink cartridge depletion, similar problems occur with conventional thermal transfer printers that use a consumable ink ribbon and with laser printers that use consumable toner. When the consumable material is depleted or nearly depleted, the printer goes off-line. The operator must replenish the consumable material and then restore the printer to the on-line state by means of an operation such as those described above.

At the same time, however, a demand for lower cost and higher reliability has encouraged printer manufacturers to reduce the number of parts and components while attempting to maintain functionality. This has led to an elimination of cover sensors and dedicated on-line switches used for the operations described above.

A technology for eliminating such on-line switches and cover sensors has been disclosed in JP-A-47992/94. The method of this technology assumes that the ink or other consumable material is replenished within a predefined period after the printer goes off-line and automatically restores the on-line status when this period expires.

The problem with this method is that the actual time required to replace the roll paper or other consumable materials varies according to the operator and the operator's familiarity with the printer. Furthermore, it may be necessary or desirable to replenish more than one consumable material at the same time, e.g., replace the ink cartridge at the same time as the roll paper. As a result, it may not always be possible to resume printing within a constant period of time. If printing is resumed prematurely, information may be printed incorrectly and/or print data may be lost. If this method is implemented with a kitchen printer or cash register, loss of print data can cause business disruptions or other problems.

The document EP-A-0 608 106 discloses a printing apparatus for printing data received from a host device. The printing apparatus is configured to selectively switch between a first state, an online state, in which it is ready to print the data and a second state, and offline state, in which it is not ready to print the data, and to notify said host device of the currently selected state. The printing apparatus comprises: detectors for detecting depletion or absence and replenishment or presence of consumable materials consumed by printing said data, and for causing the printing apparatus to enter said second state in response to detecting depletion or absence of a consumable material; a controlling device including an operation key that can be manually operated to cause said printing apparatus to perform a primary function or a secondary function, the controlling device selectively assuming a first mode of control for causing the printing apparatus to perform said primary function and a second mode of control for causing the printing apparatus to perform said secondary function, namely to switch from said second state to said first state. In this prior art the different control modes of the controlling device are achieved by operation of respective different keys.

An object of the present invention is to resolve these problems by providing a printing apparatus in which a dedicated on-line switch and cover sensors are not required, yet retaining much of the functionality they provide, and enabling a controlled restoration of the on-line state, thereby helping prevent loss of the data to be printed.

This object is achieved by a printing apparatus according to claim 1 and by a method according to claim 15. Preferred embodiments of the invention are subject matter of the dependent claims.

The first state is used herein in reference to the on-line state, which in the present invention means the state in which the printer is ready to print. In a printing apparatus comprising internal data storage such as a receive data buffer, the data to be printed is read from the internal data storage and printed on the print medium during the on-line state. In a printing apparatus not equipped with internal data storage, the printing process executed during the on-line state prints on the print medium as the data is received from the host device.

The second state as used herein refers to the off-line state, which is normally the state in which data transfers from the host device to the printing apparatus should be stopped. When data is received in this state, it can be lost if internal storage is full or the print mechanism does not function. This state, therefore, is not necessarily a state in which no data is received from the host device.

Strictly speaking, the replenishment and depletion states represent transitional conditions occurring when consumable materials are replenished and depleted, respectively. For purposes of this disclosure, these states may also simply mean that the consumable material is present or is not present; therefore, the detectors may simply be sensors detecting whether or not the consumable materials are present.

As a result, the present invention provides a function, i.e., an on-line function, for restoring the printing apparatus to the on-line state when the controlling device is operated after the operator replenishes the depleted consumable material.

For example, a paper-end sensor can be used as a detector for detecting depletion of the consumable print medium, i.e., printer paper, and a paper feed switch can be used as the controlling device. In this case the primary function of the paper feed switch is to advance the print medium; however, the secondary function to be performed when the consumable roll paper is replenished is to return the printing apparatus to the on-line state. This makes it possible for the printing apparatus to return on-line and continue printing once the operator replenishes the print medium and operates the paper feed switch.

Selection of the second mode of control is preferably made after waiting a first period of time after a detector detects the replenishment or presence of consumable materials. It is then possible to retain the primary function of the controlling device after the consumable materials are replenished, and the replenishment of the consumable materials can be more reliably accomplished. By operating the controlling device (the paper feed switch in the above example) within the first period of time, a paper feed operation can be executed and the print medium can be easily and reliably advanced into proper position.

It is further preferable for the second mode of control to be selected after waiting a period of time after the last operation of the controlling device within the first period of time. This makes it possible to eliminate the time-based constraints imposed in the prior art that are associated with allowing use of the primary or normal function of the controlling device after replenishing the consumable materials. This sequence makes it possible to avoid unintentional selection of the on-line state caused by operation of the controlling device, e.g., the paper feed switch, switching to the second mode of control while the print medium is still being advanced after replenishing the consumable materials to remove a damaged or discolored paper leader, for example.

It is also possible to automatically switch to the first (on-line) state and provide use of the primary function of the controlling device after waiting a second period of time from selection of the second mode of control. When the operator does not have time to operate the controlling device or forgets to operate it, this makes it possible for the controlling device to automatically assume the first mode of control and for the printing apparatus to automatically resume normal operation after waiting the second period of time.

After selecting the second mode of control in each of these cases, it is also possible to switch to the on-line state in response to particular command data from the host device which is processed immediately after receipt irrespective of the on-line or off-line state of the printing apparatus, i.e., real-time command data. It is therefore possible to restore the on-line state either manually or by command from the host device.lf the host device is located remotely from the printing apparatus, an operator can bring the printing apparatus on line at the more convenient location at either the printing apparatus or at the host device.

The present invention can also be practiced as a method for controlling a printing apparatus with the same effects and benefits described above.

The invention will be described in detail below with reference to the drawings illustrating preferred embodiments of the invention only.
- Fig. 1: is an oblique overview of a printer according to a preferred embodiment of the present invention.
- Fig. 2: is a cross sectional view of the printer mechanism used in the embodiment of Fig. 1.
- Fig. 3: is a functional block diagram of a printer according to a preferred embodiment of the present invention.
- Fig. 4: is a flow chart used to describe the operation of a printer according to the embodiment of Fig. 3.
- Fig. 5: is a block diagram of a switch function selector in a printer according to a preferred embodiment of the present invention.
- Fig. 6: is an oblique overview of the printer mechanism used in an alternative embodiment of the present invention.
- Fig. 7: is a functional block diagram of a printer according to the alternative embodiment of the present invention.
- Fig. 8: is a flow chart used to describe the operation of a printer according to the alternative embodiment of Fig. 7.
- Fig. 9: is a flow chart of the control method of a further alternative embodiment of the present invention.
- Fig. 10: is a flow chart of the control method of a further alternative embodiment of the present invention.

Like features in the drawings are denoted by like reference numbers.

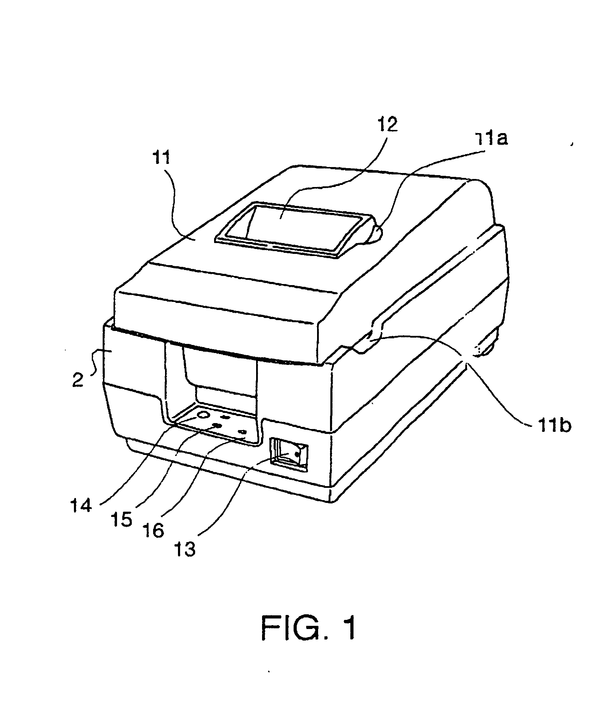

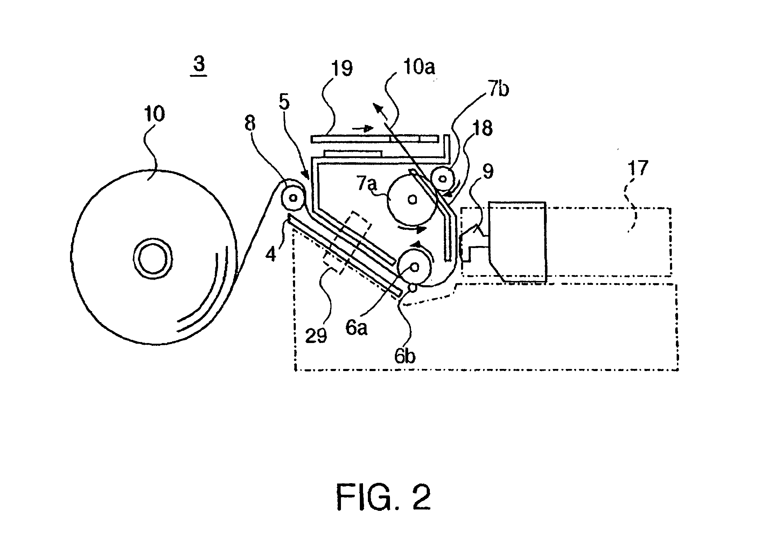

Fig. 1 is an external view of one of a printing apparatus, printer 2, according to the present invention. Referring to a cross-sectional view illustrated in Fig. 2, the printer mechanism 3 inside of printer 2 comprises a paper transport mechanism for advancing the roll paper 10 by means of a stepping motor, not shown in the figure, and paper transport rollers 7a and 7b, a print assembly for printing on the roll paper 10 by means of ink ribbon 17 and print head 9, and a paper-end sensor 29. The paper-end sensor 29 may be placed in a variety of locations and may be implemented using a photo interrupter, lever switch, or other detection mechanism.

Referring to Fig. 1, printer 2 further comprises a cover 11 to prevent the operator from accidentally touching the print assembly. Cover 11 can be opened by lifting the front edge near printer operating panel 16, thus rotating cover 11 up on a hinge disposed at the opposite end and exposing the inside of the printer. An opening 12 through which the roll paper is ejected after printing is disposed in the middle of the cover 11. When printer 2 is used for printing receipts, a cut receipt is ejected from opening 12. It is not essential for cover 11 to be connected to printer 2 by a hinge. Alternatively, cover 11 can be provided in a manner allowing the cover 11 to be completely removed to open the printer 2. To facilitate cover removal, indents 11 a may be provided in cover 11 on opposite sides of opening 12 and at approximately the center of gravity of cover 11 in the front-back direction. A recess 11b is also provided in the side of printer 2 to facilitate replacing the ink ribbon 17.

Printer operating panel 16 and power supply switch 13 are provided at the front of printer 2. Operating panel 16 is recessed from the front face of printer 2 to prevent accidental operation of the printer operating panel controls by the operator, and comprises a controlling device, switch 14, that can be operated by the operator to advance the roll paper, and an indicator 15 used by the printer 2 to notify the operator of the current printer status. Note that while a light-emitting diode (LED) is used for indicator 15 in the present embodiment, essentially any other type of display such as a liquid crystal display may be alternatively used. A conductive rubber switch implements switch 14 in this embodiment, but a variety of other push-button switches or momentary switches may be used. The power supply switch 13 is also recessed from the front face of printer 2 to prevent accidental operation by the operator.

Referring again to Fig. 2, the illustration shows roll paper 10 already loaded into the printer mechanism 3. The following paragraphs describe one way in which roll paper 10 may be replenished in a printing apparatus embodying several aspects of the present invention.

The leading edge 10a of roll paper 10 is inserted into paper supply opening 5 and slid along paper guide 4. When leading edge 10a reaches the position of paper-end sensor 29, the leading edge of roll paper 10 is detected. If switch 14 is operated after leading edge 10a has been detected by paper-end sensor 29, paper transport rollers 6a, 6b, 7a and 7b rotate in the directions of the arrows (as will be explained later, in an alternative embodiment such loading of the paper is commenced as soon as the leading edge of roll paper 10 is detected and without need to operate switch 14). Paper transport rollers 6a and 6b grab the leading edge 10a of roll paper 10, and the paper loading operation begins. When the paper has been advanced a known distance, leading edge 10a passes by the print position located between print head 9 and platen 18 and roll paper 10 is thereby placed in proper position for subsequent printing. The part of roll paper 10 advanced outside of printer mechanism 3 is cut off by cutter 19 disposed above the printer mechanism 3. Note that idling roller 8 is disposed in front of paper supply opening 5 to reduce the paper transportation load originating in the inertial moment of roll paper 10.

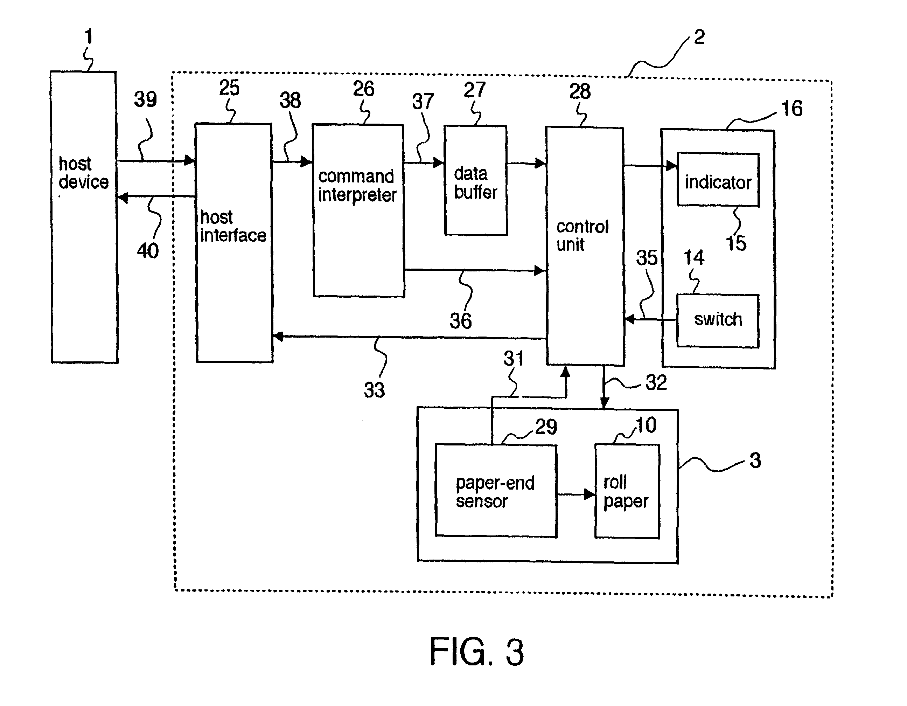

Fig. 3 is a block diagram illustrating in some detail the functionality and operation of printer 2 of the present embodiment. The commands and print data 39 transmitted from host device 1 are received through a host interface 25 inside printer 2. The host interface 25 converts the received commands and print data 39 into the internal input data 38 format, and passes the internal input data 38 to command interpreter 26.

By interpreting internal input data 38, command interpreter 26 passes the real-time commands 36 to control unit 28 to be executed immediately, and stores all other commands and the print data 37 to data buffer 27. Operating in response to requests from control unit 28, data buffer 27, which is a first-in, first-out (FIFO) buffer, outputs the stored commands and print data 37 to control unit 28 in the sequence in which they were received from command interpreter 26.

Real-time commands 36 received from command interpreter 26 are given priority for immediate execution by control unit 28, but other commands and print data 37 are executed and printed as they are sequentially received from data buffer 27. Control unit 28 also controls the sending and receiving of signals between printer mechanism 3 and the printer operating panel 16 as may be necessary for command execution, and it passes internal output data 33 to host interface 25 as necessary. The host interface 25 then converts this internal output data 33 to printer status data 40 and sends the printer status data 40 to host device 1.

As described above, roll paper 10 is loaded into printer mechanism 3 and the presence of roll paper 10 in printer mechanism 3 is detected by paper-end sensor 29. The detection signal 31a is output from paper-end sensor 29 and is input to control unit 28. In this embodiment, the LOW state of a binary HIGH/LOW paper-out signal 31 is used to indicate that no roll paper is loaded.

The control unit 28 supplies a binary paper feed signal 32 to instruct printer mechanism 3 to advance the roll paper. When paper feed signal 32 is brought HIGH, roll paper transportation begins and continues until the paper feed signal 32 is brought LOW again.

The switch signal 35 received from switch 14 is input to control unit 28, which causes control unit 28 to selectively perform any of a plurality of functions as described below.

More specifically, when the printer 2 is on-line, control unit 28 operates printer mechanism 3 to print to the roll paper 10 according to print data and commands 39 received from host device 1. When operation of switch 14 is detected, control unit 28 performs the function assigned to switch 14 according to the mode of control currently selected for switch 14. When the end of roll paper 10 is detected by paper-end sensor 29, control unit 28 causes printer 2 to enter an off-line state, interrupts the printing process and stops reading data from data buffer 27. To prevent data loss resulting from the host device 1 continuing to supply command and print data which exceeds the storage capacity of data buffer 27, the printer 2 notifies the host device 1 of the current off-line state using printer status data 40.

In a preferred embodiment, when in the off-line state, printer 2 continues to receive and interpret command and print data 39; however, normal commands and print data 37 converted from command and print data 39 cannot be stored when there is no remaining capacity in data buffer 27. To prevent losing any commands and print data 39, host device 1 should immediately stop sending commands and print data 39, except for commands which are real-time commands 36, upon being notified of the off-line state.

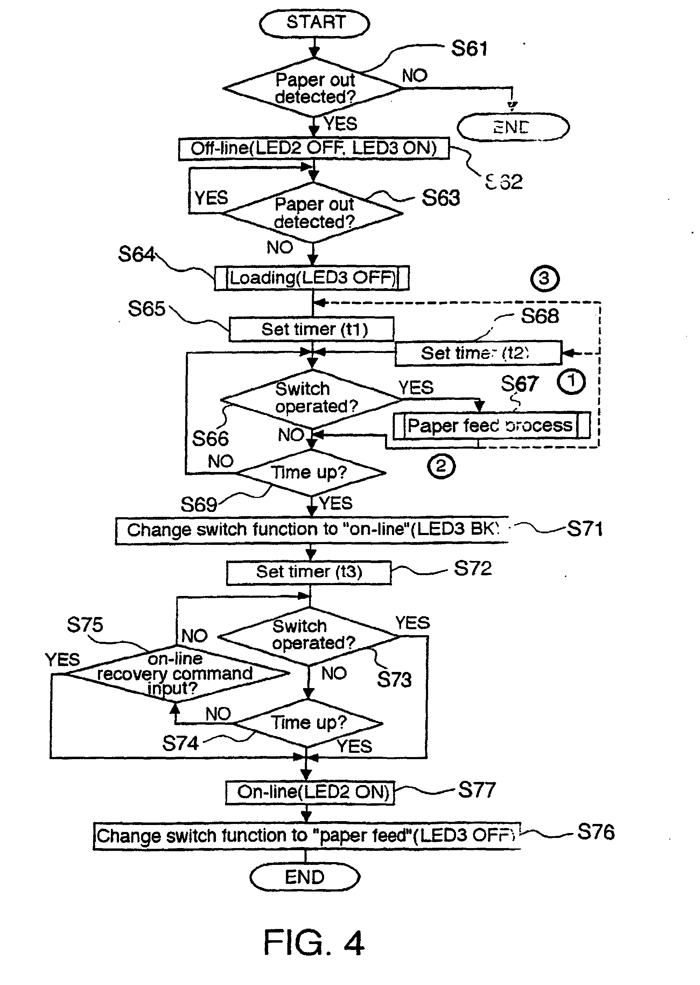

The flow chart shown in Fig. 4 illustrates the steps in one process for replenishing the roll paper 10 in a printing apparatus such as printer 2 embodying several aspects of the present invention. This process is referred to below as a "loading process."

When it is first detected at step S61 from paper-out signal 31 that there is no more roll paper 10 loaded, control unit 28 causes printer 2 to switch to the off-line state in step S62. Both the printing process and the reading of commands and print data from data buffer 27 are interrupted in this off-line state. Control unit 28 notifies host device 1 through host interface 25 that printer 2 is off-line. As explained above, upon being notified of the off-line state, host device 1 should stop sending commands and print data. If, however, paper-out signal 31 is not detected in step S61, the roll paper replenishing process is terminated immediately and normal operation continues.

After an off-line state has been declared in step S62, this off-line state is sustained until the replenishment or presence of roll paper 10 is detected in step S63 from paper-out signal 31 indicating that roll paper 10 is present. In response to the detection of roll paper 10, the loading process continues with step S64 which sets paper feed signal 32 to the HIGH state, thus causing printer mechanism 3 to advance the roll paper 10 a known distance.

When this advancing of roll paper 10 is finished, a duration t1 is set for a timer in step S65. The duration t1 defines the length of the period in which switch 14 may be used to request a paper feed function, thereby enabling the operator to advance the roll paper 10 while the printer 2 is off-line. When the roll paper leader is discolored or damaged, for example, this paper feed function enables the operator to advance the damaged leader beyond the print position after loading the roll paper 10.

In an alternative embodiment step S64 which automatically advances the roll paper 10 is omitted. Instead the operator is given the opportunity to advance the roll paper 10 by operating switch 14 (step S66). This alternative would allow, for instance, changing the paper feed path, if necessary, before the paper is advanced.

Step S66 checks whether switch 14 was operated. If it was operated, a paper feed signal is output to printer mechanism 3 in step S67 to further advance the paper.

Because this paper feed operation usually requires a certain amount of time to complete, the duration of the timer may be extended or the timer may be reset after the paper is advanced in order to delay the time at which the timer elapses. The control sequence shown as (1) in Fig. 4 illustrates one way in which the timer is reset, i.e., the timer is set in step S68 to a new duration t2 commensurate with the time required for the paper feed operation. The control sequence (2) illustrates a process in which the timer is not reset, and control sequence (3) illustrates a process in which the timer is reset to t1.

This timer may be set and reset in a variety of ways, a few of which are discussed above. The time at which this timer expires, referred to as time Q below, indicates when the function of switch 14 is to be changed. It is assumed at time Q that all necessary loading and paper feed operations have been completed. If time Q has been reached, there is a high probability that roll paper 10 has been replenished. Step S69 checks whether the period measured by the timer is completed. If it has, the function of switch 14 is changed in step S71 such that switch 14, if operated, would request a switch to the on-line state, enabling the operator to set the printer on-line again. The duration of a timer is then set to t3 in step S72 and step S73 checks whether switch 14 was operated. If switch 14 was operated, control unit 28 switches the printer 2 to the on-line state in step S77, changes the function of switch 14 to a paper feed function in step S76, and resumes processing commands and print data stored in data buffer 27. The host device 1 is also notified of the switch to the on-line state.

It should be noted that if a particular embodiment of printer 2 requires switch 14 be pressed to restore the on-line state, the printing process will not be resumed if the operator forgets to press the switch 14. This causes printer 2 to remain off-line even though the consumable materials have been replenished. To avoid this problem, preferred embodiments of printer 2 incorporate additional features of the present invention as illustrated in Fig. 4. These features are described below.

One feature is a time-out function. More specifically, referring to Fig. 4, if switch 14 is not operated (step S73) by time t3 (step S74) after time Q when the function of switch 14 should be changed but neither the operator nor the host device 1 (an on-line recovery command explained below has not been received) has requested the printer 2 to switch to the on-line state (step S75), the on-line state is automatically restored by resetting the printer on-line in step S77. Note that the duration defined by time t3 should be sufficient for the operator to complete the roll paper replenishing task. This makes it possible to restore the printing apparatus to an on-line state after the replenishing task is completed even if switch 14 is not operated.

It should be noted that the values for times t1, t2, and t3 may be set during a printer initialization process or by control commands from the host device 1. The timer measuring these times may be implemented in software executed by control unit 28, a microprocessor for example, or implemented in hardware using digital and/or analog circuits (in which case one common timer or individual timers could be used). The respective processes performed in response to the timer measuring these times can be provided by interrupt-driven software, for example. No particular implementation is critical.

Another feature is a real-time command function commanding recovery of the on-line state. This particular real-time command is referred to below as the "on-line recovery command." If the command interpreter 26 determines that data received from the host device 1 is a real-time command, the real-time command is sent immediately to the control unit 28 even if unprocessed data is still stored in data buffer 27. The control unit 28 subsequently executes this real-time command. In this manner, the host device 1 can command printer 2 to switch to the on-line state. The command interpreter 26 may be implemented in a variety of ways including by an interrupt driven process or a polling process. No particular implementation is critical.

This on-line recovery command process is described below with reference to the flow chart in Fig. 4. Step S74 checks whether the timer initially set in step S72 has elapsed. If so, printer 2 is immediately switched on line at step S77. If not, step S75 checks whether an on-line recovery command has been received from the host device. If so, the process proceeds to step S77 while otherwise it performs the loop S73 - S74 - S75 until either the timer elapses or an on-line recovery command is received. It is therefore possible to reset the printer to an on-line state by means of a control command supplied from the host device 1 even if the operator forgets to press switch 14 after replenishing the paper.

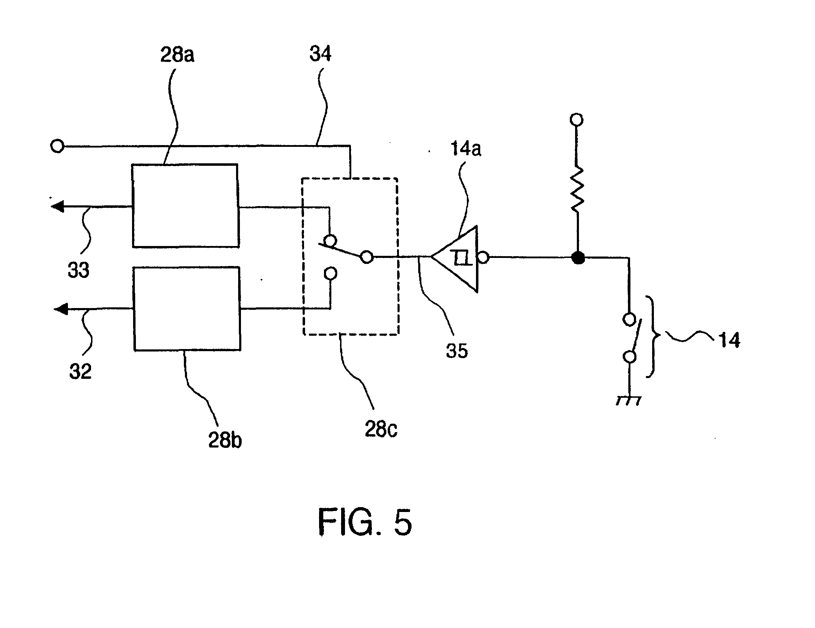

Fig. 5 is a block diagram illustrating features of one embodiment of a function selector used to select various functions for switch 14. The diagram shown in Fig. 5 is used for illustrative purposes and should not be understood to represent any particular embodiment required to practice the present invention. Selecting functions for switch 14 is accomplished by switching signal selector 28c to selectively connect switch signal 35 to on-line signal generator 28a or paper feed signal generator 28b, and by applying switched-function selector signal 34 controlling to which signal generator 28a or 28b the switch signal 35 should be connected. When switch 14 is pressed and a LOW level signal is input to the input buffer 14a, an inverted signal, i.e., a HIGH signal, is output from input buffer 14a as the switch signal 35. Switch signal 35 is then supplied by signal selector 28c to on-line signal generator 28a or paper feed signal generator 28b according to the switched-function selector signal 34.

A function selector can be implemented by software that is executed in control unit 28. For example, assuming control unit 28 to be a microprocessor, changing the function of switch 14 can be accomplished by determining in a program executed by the microprocessor whether the state of a microprocessor input port, to which switch signal 35 is connected, is supposed to specify a paper feed operation or a switch to an on-line state. Alternatively, signal selector 28c may comprise a data selector of common design where the switched-function selector signal 34 is supplied as the selector signal from an output port of the microprocessor. In this case, the data selector outputs are connected to corresponding microprocessor input ports which provide signals requesting the specific functions.

The present embodiment has been described using paper-end sensor 29 to detect the presence of a specific consumable material, i.e., roll paper 10, but the present invention is not so limited. It is also possible to use a near-end sensor to detect a particular remaining amount of roll paper 10, a ribbon sensor to detect how much ink ribbon remains, or a remaining ink detector to detect how much ink remains in the ink cartridge of an ink jet printer.

An embodiment of an ink-jet printer incorporating various aspects of the present invention is described next by way of example, explaining how the present invention may be practiced with another type of consumable material.

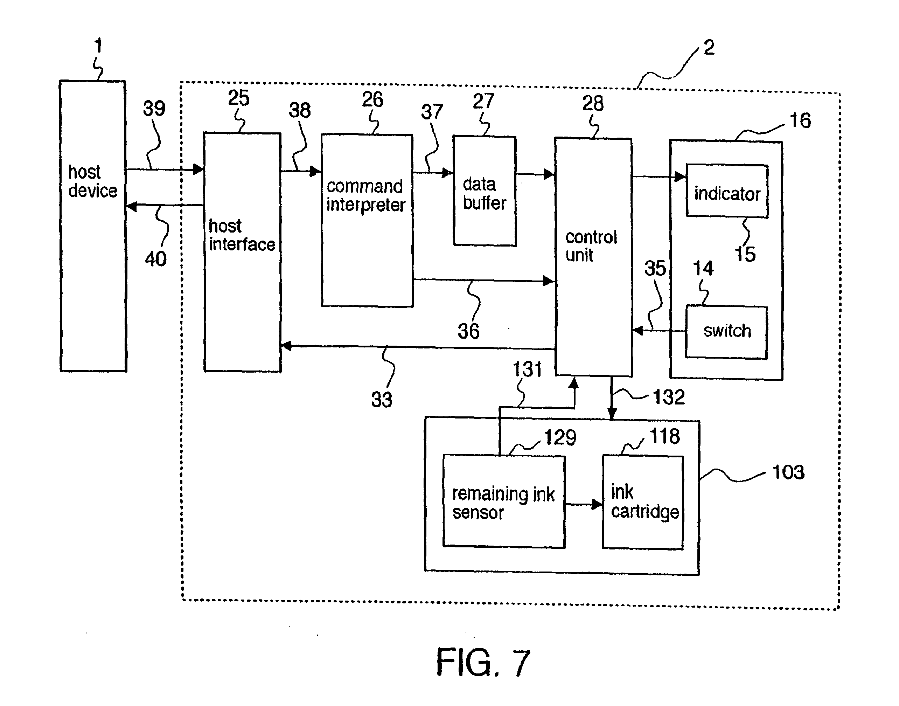

The block diagram illustrated in Fig. 7, which is very similar to the block diagram illustrated in Fig. 3, is used to describe the functionality and operation of the present printer embodiment. The major distinctions between the two diagrams are the details of printer mechanism 3 shown in Fig. 3 as compared to the details of printer mechanism 103 shown in Fig. 7. In particular, ink cartridge 118 is substituted for roll paper 10, remaining-ink sensor 129 is substituted for paper-end sensor 29, ink-out signal 131 is substituted for paper-out signal 31, and refresh signal 132 is substituted for paper feed signal 32. Elements and operations that are common to the two embodiments are not covered in the following discussion.

The print mechanism of the present embodiment is designed to print onto roll paper using an ink jet head disposed at the end of the ink cartridge. A remaining-ink sensor for detecting how much ink is left in the ink cartridge is disposed in proximity to the ink cartridge. The remaining-ink sensor of the present embodiment uses a pair of electrodes disposed in the ink path inside the ink cartridge to detect the resistance between these electrodes; however, the invention is not limited to this sensor type. Other types of sensors may be used including, for example, infrared sensors that sense reflections of an infrared beam from a reflector placed on the ink bag containing the ink to detect how much ink is left by determining an amount of the deformation of the ink bag.

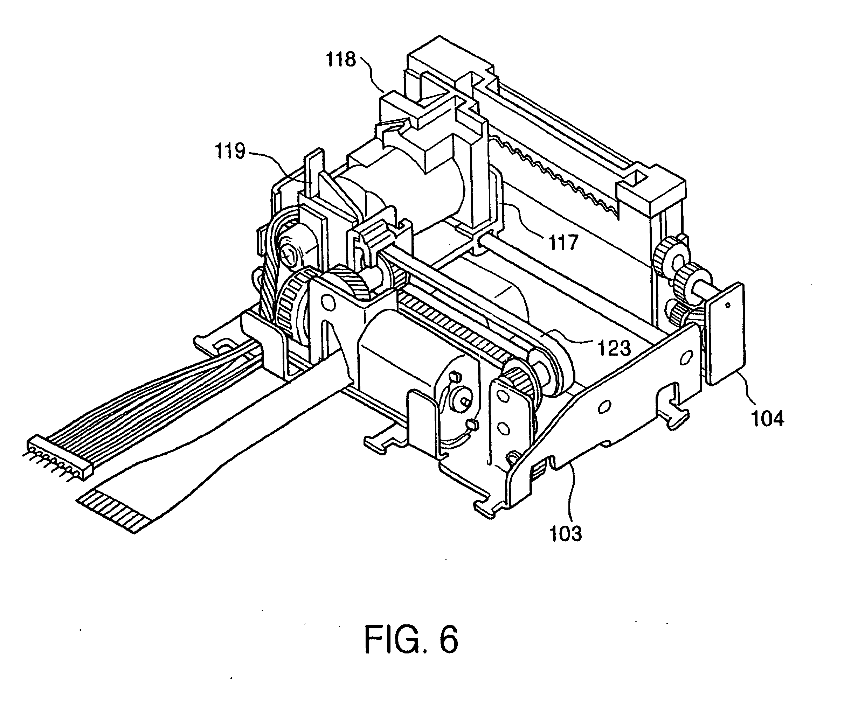

Fig. 6 is a schematic diagram of the printer mechanism 103 used in the printer of the present embodiment. Roll paper or other recording medium is transported by paper feed unit 104 to the print position located in front of ink cartridge 118 and print head unit. The remaining-ink sensor, not shown in the figure, generates the ink-out signal 131 whenever it detects that the amount of available ink is low enough that the ink cartridge should be replaced. The printer mechanism 103 flushes ink nozzles, referred to herein as a refresh operation, in response to the refresh signal 132 received from control unit 28. More specifically, when refresh signal 132 is HIGH, the carriage is moved to a position suitable for refreshing the nozzles and the nozzles are flushed until refresh signal 132 becomes LOW again.

Ink cartridge 118 may be replaced by operating replacement lever 119. More specifically, by moving replacement lever 119 in the direction toward the right side of the drawing, ink cartridge 118 may be disengaged from carriage 117. After setting a new ink cartridge 118 on carriage 117, the replacement lever 119 is returned to the original position to re-engage ink cartridge 118 and carriage 117.

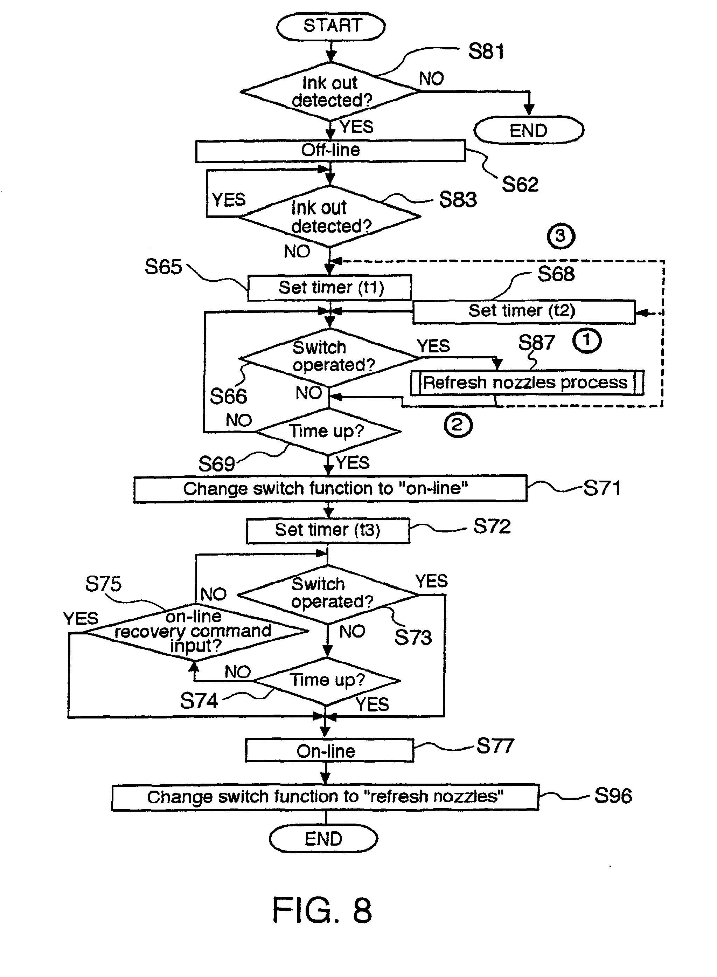

The flow chart shown in Fig. 8 illustrates the steps in one process for replacing an ink cartridge. This process is substantially identical to the roll paper "loading process" described above; therefore, only differences are described below.

Because of the way a refresh operation is carried out for ink cartridge 118 in the present embodiment, it is uncertain whether a refresh operation can safely commence immediately after ink cartridge replacement is detected (step S83). This uncertainty exists because it is not possible to detect whether the operator has removed his hand from ink cartridge 118. Unlike one embodiment of the roll paper replenishing operation described above, this printer embodiment preferably should not begin a refresh operation immediately after detecting the replenishment of ink.

Once "ink out" is detected in step S81, step S66 checks whether switch 14 was operated. If it was operated, a "refresh nozzles process" is executed in step S87. Preferably, the number of times the nozzles are flushed in the initial refreshing operation after the ink cartridge is installed is greater than the number of times the nozzles are flushed in response to subsequent refresh operations initiated manually by operating a switch. Even with new ink cartridges the ink in the nozzles is often highly viscous and more flushing operations are therefore required to adequately refresh the nozzles. It is also possible to implement the present embodiment so that the flushing of nozzles continues for as long as the switch is depressed, thereby enabling the operator to control how much ink is ejected from the nozzles during each refresh operation.

Accordingly, the present embodiment commences an initial refresh operation (S87) on a newly installed ink cartridge 118 when the operator presses switch 14 after replacement of ink cartridge 118 has been detected. Flushing is also performed in response to an operation of switch 14 at any time prior to the expiration of a timer (see step S69). It will be understood that step S96 corresponding to step S76 in Fig. 4 changes the function of switch 14 to a refresh nozzles function.

As described above, the present invention provides an effective method and apparatus for retaining much of the functionality of dedicated switches enabling a controlled return to an on-line state for a printer after depleted materials have been replenished without requiring the use of dedicated switches. The present invention may be applied to any and all consumable materials used by a printer. While Figs 4 and 8 have been described to relate to two embodiments, both may be implemented in one printer. It will be appreciated that in such case two separate switches may be used as the paper advance and ink recovery controlling devices, respectively.

The various embodiments and features discussed above, however, may not provide all of the functionality that might be desired. For example, if incorrect print data is sent to a printer from which dedicated cover sensors and on-line/off-line controls are eliminated, the embodiments discussed above do not provide any way to stop a printing operation other than cutting off the power supply to the printer; however, when the power is turned off, all commands and print data already sent to and stored in the printer will be lost. Various aspects of the invention described below provide for an effective apparatus and method whereby the printing process can be interrupted without turning the printer power off.

This problem is resolved in one embodiment by selectively changing the mode of control of a switch or controlling device according to the state of the printing apparatus. For example, the paper feed switch normally causes the printing apparatus to advance the recording paper; however, once the printing apparatus starts printing, controlling devices such as the paper feed switch, refresh switch, and other operator switches are not used until the printing is completed. It is therefore possible during this time to change the control mode of all or any of these switches so that they function like on-line/off-line selector switches. When one of these switches is operated after the printing starts, the control unit changes the printing apparatus status from on-line to off-line, interrupting the printing and switching to a state in which the printing apparatus is not ready to print data.

The construction of a printer according to this embodiment is substantially identical to that of printer 2 discussed above. Only the differences between the present embodiment and the previously described embodiments of printer 2 (including their combination) are described below.

Plural LEDs constituting an LED group are provided on operating panel 16 to display the plural control modes described above and below. The on/off state of these LEDs is controlled by control unit 28.

A print buffer for storing one line of bit-mapped data converted for printing from the print data read from data buffer 27 is also provided in control unit 28. The bit-mapped data stored in the print buffer are read in the array sequence of the printing elements of print head 209, and is deleted after being read. The process of storing bit-mapped data into the print buffer is performed in parallel with paper feed, carriage return, or other similar operations that are executed after the printing of one line is completed. This means that the printing apparatus is either in the process of printing one line or is in the process of preparing to print one line if print data is stored in the print buffer.

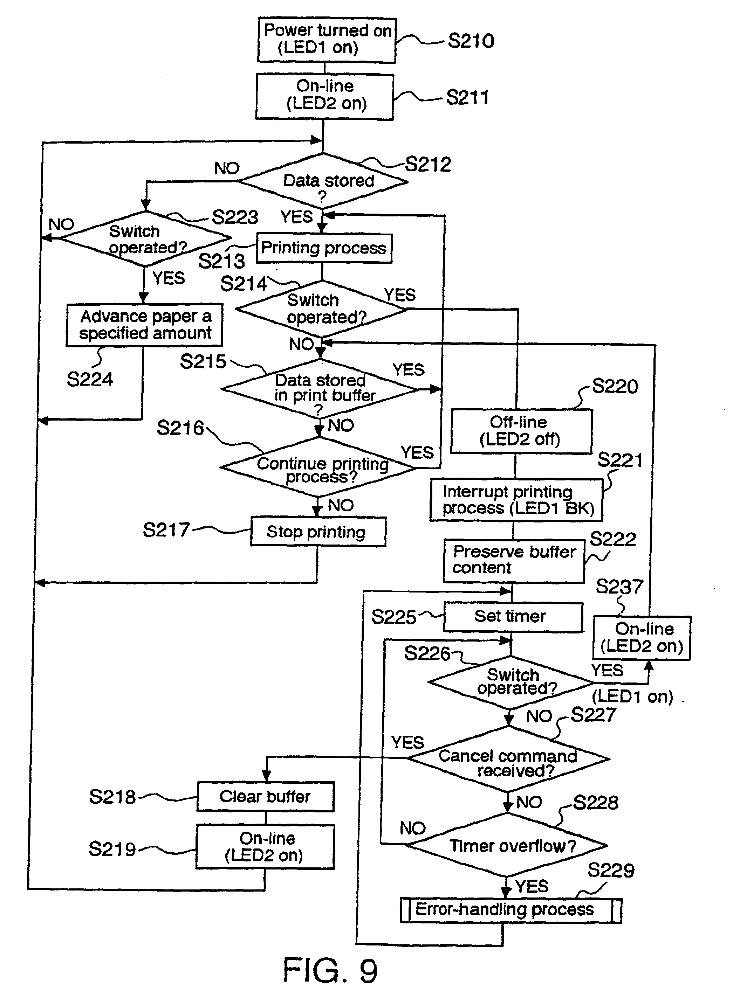

The flow chart shown in Fig. 9 illustrates the steps in one control method of the printing apparatus according to the present embodiment. This control method is described next.

At step S210 printer 2 performs a standard initialization procedure and any other process normally executed thereafter. At step S211 the printing apparatus goes on-line and stands by to receive data. Step S212 determines whether any print data has been received, i.e., whether data buffer 27 is storing any print data. If no print data is stored in data buffer 27, step S223 checks whether switch 14 is being operated. When switch 14 is operated at this time (step S223), the recording paper is advanced a particular distance or time corresponding to the period or number of times that switch 14 is pressed (step S224).

When step S212 determines that print data has been received, step S213 begins a printing process by converting the data stored in data buffer 27 into bit-mapped data which is stored into the print buffer. When all of the data needed to print one line has been buffered, the printing process starts prints the line corresponding to the bit-mapped data. It should be noted that a memory area with the capacity to store one line of bit-mapped data is used for the print buffer in the present embodiment because this embodiment is assumed to be a serial printer. The invention is also applicable to printers that buffer and print other units of information such as an entire page or a single character; therefore, the capacity of the print buffer should be established to store the appropriate data for printing one page, one character, etc.

If switch 14 is not operated at step S214, step S215 determines whether the next tine of print data is stored in the print buffer. If there is no data in the print buffer, step S216 determines whether any unprocessed print data remains in data buffer 27. If unprocessed print data is in data buffer 27, the printing process continues at step S213. If there is no unprocessed print data stored in data buffer 27, the printing process stops at step S217, and data buffer 27 and the print buffer are cleared at step S218. The procedure then loops back to step S212 and the printing apparatus again awaits for print data from the host device 1.

If switch 14 is operated during the printing process (step S214), printer 2 processes the switch operation as an emergency stop command by going off line and notifying host device 1 of the switch in states at step S220. In response, host device 1 should not attempt to send print data. The printing process is interrupted at step S221, the bit-mapped data already stored in the print buffer and data buffer 27 is preserved (step S222), step S225 starts a timer and printer 2 then waits until the timer expires for cancellation of the printing process (steps S226, S227 and S228). If switch 14 is operated during this timer period, printer 2 is switched to the on-line state, notifies host device 1 of the switch in state, and resumes the printing process using the data stored in the print buffer and in data buffer 27.

Whether switch 14 operates as a paper feed switch or an off-line selector switch is determined in the present embodiment by whether any data is stored in data buffer 227. More specifically, the control mode of switch 14 is changed at step S212 in response to the presence of print data stored in data buffer 27 that has been received from the host device 1.

Note that a printing process can be canceled by host device 1 issuing a real-time command to clear the print buffer and data buffer 27. To enable this, step S227 checks whether a real-time command commanding cancellation of the printing process has been received. If this real-time command has been received, step S218 clears the print buffer and data buffer 27. Step S228 monitors the timer set in step S225. If this timer period elapses, step S229 announces an error by, for example, sounding a buzzer and/or lighting an LED. Step S225 is then performed again to reset the time.

In the present embodiment just described, the operation of switch 14 during the printing process is monitored in step S214 following the printing of one-line. The present invention is not so limited, however, and an interrupt-driven process or other known means can also be used to monitor switch operation during the actual printing of a line.

The operator performing the particular operations with the above embodiment should be aware of the current printer status, but other operators may not be similarly aware of the current printer status. More specifically, with the embodiment just described, it is difficult to know whether the printing apparatus is stopped because of an interrupted printing process or because the printing apparatus is waiting for data. This problem can be resolved by the additional features described below.

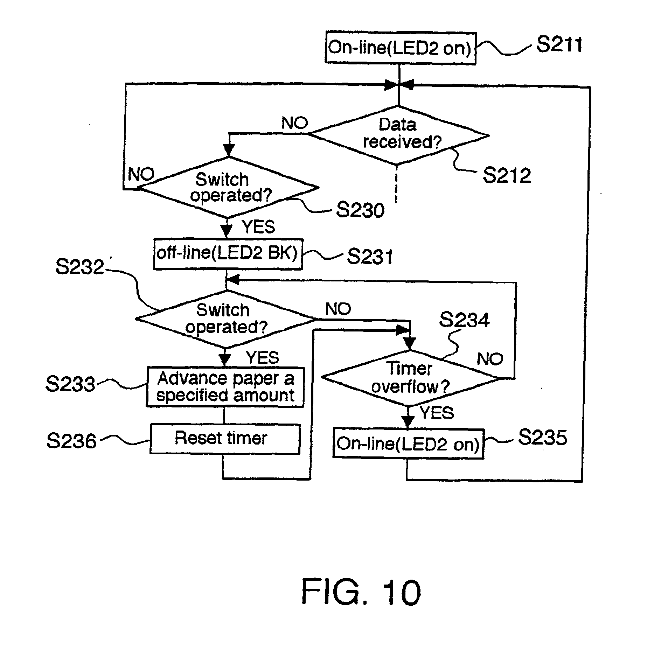

Fig. 10 is a flow chart of a process implemented in the control unit 28. Like process steps are identified by like step numbers in Figs. 9 and 10; therefore, description of steps described above is omitted below.

If switch 14 is operated at step S230 while waiting for data in step S212, step S231 causes the printer 2 to switch to the off-line state and a timer is set to measure a known period. The next operations of switch 14 operation is awaited (steps S232 and S234). If switch 14 is operated in step S232, the paper is advanced a particular distance according to the switch operation (step S233), and the timer is reset. This process keeps the printer off-line for as long as the paper feed operation is continued. However, if there is no switch operation after waiting a particular period (step S234), step S235 causes printer 2 to switch to the on-line state. The present embodiment thus differs from the above embodiment in that the printer waits for a paper feed command after going off-line from an on-line state.

It is to be noted that in combination with the alternative shown in Fig. 10 steps S76 in Fig. 4 and S96 in Fig. 8 could be changed to select the function the switch has in step 230 in Fig. 10, i.e., an off-line function.

To help operators distinguish between an emergency stop and a paper feed wait state, the LEDs of a display unit on the operating panel 16 are controlled to indicate the appropriate printer status. For example, three LEDs may be used as follows.

| LED 1 | | |
|---|---|---|
| | on | power switch ON |
| | blinking | emergency stop state |

| LED2 | | |
|---|---|---|
| | on | on-line state |
| | blinking | off-line, waiting for paper feed |

| LED3 | | |
|---|---|---|
| | on | consumable materials depleted |
| | blinking | waiting for on-line state after replenishing consumable materials |

The operation of the LEDs is controlled by control unit 28. It should be noted that LED blinking can be achieved by means of various known methods, including using timer interrupt function, for example, built in to the microprocessor constituting control unit 28. The appropriate control of each LED is shown in the flow charts of Fig. 4, Fig. 9, and Fig. 10, and is also described below.

In Fig. 4, step S62, LED2 is turned off and LED3 is turned on. LED3 is turned off in step S64, caused to blink in step S71, and turned off in step S76. LED2 is turned on in step S77.

In Fig. 9, LED1 is turned on in step S210; LED2 is turned on in step S211, turned on in step S219, and turned off in step S220. LED1 is caused to blink in step S221, and if it is detected in step S226 that switch 14 was operated, LED1 is also turned on in step S226.

In Fig. 10 LED2 is caused to blink in step S231, and is turned on in step S235.

By differentiating the LED display states, the operator can quickly determine the operating status of printer 2 at a glance.

It Is therefore possible by means of the control apparatus and method described above for a single switch to be selectively used for multiple functions, e.g., to be used as a paper feed switch and as an on-line/off-line selector switch, and operating errors can be prevented.

It will be obvious that a printing apparatus according to the present invention is not limited to a serial printer implementations as described above, but rather the invention can be applied to parallel printer implementations. The the invention is also not limited to printers using roll paper as described above, and can be adapted to detect consumption of essentially all types of consumable materials, including detecting the service life of ink ribbons used in dot impact printers and thermal transfer printers, and detecting ink consumption in ink jet printers.

## Claims

1. A printing apparatus for printing data received from a host device (1), said printing apparatus (2) configured to selectively switch between a first state in which said printing apparatus (2) is ready to print said data and a second state in which said printing apparatus (2) is not ready to print said data, and to notify said host device (1) of the currently selected state, said printing apparatus (2) comprising:
one or more detectors (28, 29, 129) for detecting depletion or absence and replenishment or presence of one or more consumable materials (10) consumed by printing said data, and for causing said printing apparatus (2) to enter said second state in response to detecting depletion or absence of one or more of said consumable materials (10),
a controlling device (14, 28) including an operation key (14) that can be manually operated to cause said printing apparatus (2) to perform a primary function or a secondary function, wherein one of multiple modes of control is selectively assigned to said operation key, said modes of control comprising a first mode for causing said printing apparatus (2) to perform said primary function and a second mode for causing said printing apparatus (2) to perform said secondary function to switch from said second state to said first state, and
a function selector (28) for selecting said second mode of control in response to one or more of said detectors (28, 29, 129) detecting replenishment or presence of one or more of said consumable materials after one or more of said detectors (28, 29, 129) caused said printing apparatus (2) to enter said second state.

2. The apparatus according to claim 1 wherein said one or more consumable materials (10) comprise a roll of paper, said detectors (28, 29) comprise a sensor (29) for detecting an end of said roll of paper, and said primary function is a transporting of paper from said roll of paper.

3. The apparatus according to claim 1 or 2 wherein said one or more consumable materials comprise ink in an ink cartridge (118), said detectors comprise a remaining-ink sensor (28, 129), and said primary function is an ink head refresh operation.

4. The apparatus according to any one of claims 1 through 3 further comprising a first timer for measuring a first period from the time replenishment or presence of a consumable material is detected by one of said detectors (29, 129) after said printing apparatus switches to said second state, wherein said function selector (28) is adapted to select said first mode of control during said first period and to select said second mode of control after said first timer elapses.

5. The apparatus according to claim 4 further comprising means for further delaying the time at which said function selector (28) selects said second mode of control whenever said controlling device (14, 28) is operated during said first period.

6. The apparatus according to any one of claims 1 through 5 further comprising a second timer for measuring a second period from the time of selection of said second mode of control by said selector (28), wherein said printing apparatus (2) is caused to switch to said first state after said second timer elapses.

7. The apparatus according to any one of claims 4 through 6 further comprising a means for causing said printing apparatus (2) to switch to said first state in response to a command received from said host device (1) after said first timer elapse.

8. The apparatus according to any one of claims 1 through 7 wherein said multiple modes of control comprise a third mode of control for causing said printing apparatus (2) to switch from said first state to said second state, wherein said function selector (28) is adapted to select said third mode of control while said printing apparatus (2) is printing.

9. The apparatus according to claim 8 further comprising stopping means for stopping said printing in response to an operation of said controlling device (14, 28) being in said third mode of control.

10. The apparatus according to claim 9 wherein said multiple modes of control include a fourth mode of control, said fourth mode of control for causing said printing apparatus (2) to resume said stopped printing, wherein said function selector (28) is adapted to select said fourth mode of control in response to said stopping of the printing.

11. The apparatus according to claim 10 further comprising a third timer for measuring a third period from the time said function selector (28) selects said fourth mode of control, and
an error output means for indicating an error when said third timer elapses before said controlling means is operated after said fourth mode of control has been selected.

12. The apparatus according to any one of the preceding claims wherein said multiple modes of control include a fifth mode of control, said fifth mode of control for causing said printing apparatus (2) to switch from said first state to said second state, wherein said function selector (28) is adapted to select said fifth mode of control when there is no unprocessed data from the host device (1) remaining in the printing apparatus (2).

13. The apparatus according to claim 12 wherein said function selector (28) is adapted to select said first mode of control in response to said printing apparatus switching to said second state and the printing apparatus further comprises a fourth timer for measuring a fourth period from the time said controlling device (14, 28) is operated while in said fifth mode of control, wherein said printing apparatus (2) is controlled to switch from said second state to said first state after said fourth timer elapses.

14. The apparatus according to any one of the preceding claims further comprising a display means for displaying the current state of the printing apparatus (2); and the current mode of control of said controlling device (14, 28).

15. A method of controlling the printing apparatus defined in any one of the preceding claims, said method comprising:
(a) detecting the depletion or absence and the replenishment or presence of consumable materials (10) in said printing apparatus (2),
(b) causing said printing apparatus (2) to enter said second state in response to detecting depletion or absence of one or more of said consumable materials (10),
(c) detecting, subsequent to step (b), the replenishment or presence of consumable materials (10), and
(d) selecting said second mode of control of said controlling device (14, 28) in response to step (c).

16. The method according to claim 15 wherein step (d) comprises:
(d1) measuring a first period in response to said detecting in step (c),
(d2) selecting said first mode of control while said first period is being measured, and
(d3) selecting said second mode of control after said first period elapses.

17. The method according to claim 16 wherein said selecting in step (d3) is delayed whenever said controlling device (14, 28) is operated before said first period elapses.

18. The method according to any one of claims claim 15 to 17 further comprising
(e) measuring a second period in response to said detecting in step (c), and
(f) switching said printing apparatus (2) to said first state when said second period elapses.

19. The method according to any one of claims 15 to 18 further comprising
(g) switching said printing apparatus (2) to said first state in response to a command received from said host device (1) after selecting said second mode of control in step (d).

20. A control method according to any one of claims 15 to 19 further comprising
(h) switching said printing apparatus (2) from said first state to said second when said controlling device (14, 28) is operated while said printing apparatus (2) is printing,
(i) stopping said printing in response to said switching in step (h), and
(j) resuming said printing when said controlling device (14, 28) is operated subsequent to step (i).

## Patentansprüche

1. Druckvorrichtung zum Drucken von Daten, die von einer Hostvorrichtung (1) empfangen werden, wobei die Druckvorrichtung (2) ausgebildet ist, um selektiv zwischen einem ersten Zustand, in welchem die Druckvorrichtung (2) bereit ist, die Daten zu drucken, und einem zweiten Zustand, in welchem die Druckvorrichtung (2) nicht bereit ist, die Daten zu drucken, umzuschalten, und die Hostvorrichtung (1) vom momentan gewählten Zustand zu informieren, wobei die Druckvorrichtung (2) umfaßt:
einen oder mehrere Detektoren (28, 29, 129) zur Erfassung des Aufbrauchs oder der Abwesenheit und der Wiederauffüllung oder Anwesenheit eines oder mehrerer Verbrauchsmaterialien (10), die durch das Drucken der Daten verbraucht werden, und zur Veranlassung der Druckvorrichtung (2), als Antwort auf das Erfassen des Aufbrauchs oder der Abwesenheit eines oder mehrerer der Verbrauchsmaterialien (10) in den zweiten Zustand einzutreten;
eine Steuervorrichtung (14, 28) einschließlich einer Betätigungstaste (14), die manuell betätigt werden kann, um die Druckvorrichtung (2) zu veranlassen, eine primäre Funktion oder eine sekundäre Funktion auszuführen, wobei einer von mehreren Steuermodi selektiv der Betätigungstaste zugewiesen ist und die Steuermodi einer ersten Modus umfassen, um die Druckvorrichtung (2) zu veranlassen, die primäre Funktion auszuführen, sowie einen zweiten Modus, um die Druckvorrichtung (2) zu veranlassen, die sekundäre Funktion auszuführen, um von dem zweiten Zustand zu dem ersten Zustand zu schalten, und
einen Funktionsselektor (28) zur Wahl des zweiten Steuermodus als Antwort darauf, daß eine oder mehrere der Detektoren (28, 29, 129) die Wiederauffüllung oder Anwesenheit eines oder mehrerer der Verbrauchsmaterialien erfaßt, nachdem einer oder mehrere der Detektoren (28, 29, 129) die Druckvorrichtung (2) veranlaßt haben, in den zweiten Zustand einzutreten.

2. Vorrichtung nach Anspruch 1, bei der das eine oder die mehreren Verbrauchsmaterialien (10) eine Papierrolle umfassen, die Detektoren (28, 29) einen Sensor (29) zur Erfassung eines Endes der Papierrolle umfassen und die primäre Funktion der Transport von Papier von der Papierrolle ist.

3. Vorrichtung nach Anspruch 1 oder 2, bei der das eine oder die mehreren Verbrauchsmaterialien Tinte in einer Tintenkartusche (18) umfassen, die Detektoren einen Resttintensensor (28, 129) umfassen und die primäre Funktion ein Tintenkopfauffrischvorgang ist.

4. Vorrichtung nach einem der Ansprüche 1 bis 3, ferner umfassend einen ersten Zeitgeber zur Messung einer ersten Zeitspanne von dem Zeitpunkt, zu dem die Wiederauffüllung oder Anwesenheit eines Verbrauchsmaterials von einem der Detektoren (29, 129) erfaßt wird, nachdem die Druckvorrichtung in den zweiten Zustand schaltet, wobei der Funktionsselektor (28) ausgebildet ist, den ersten Steuermodus während der ersten Zeitspanne zu wählen und den zweiten Steuermodus zu wählen, nachdem die erste Zeitspanne abgelaufen ist.

5. Vorrichtung nach Anspruch 4, ferner umfassend Mittel zur weiteren Verzögerung des Zeitpunkts, zu dem der Funktionsselektor (28) den zweiten Steuermodus auswählt, wann immer die Steuervorrichtung (14, 28) während der ersten Zeitspanne betätigt wird.

6. Vorrichtung nach einem der Ansprüche 1 bis 5, ferner umfassend einen zweiten Zeitgeber zur Messung einer zweiten Zeitspanne von dem Zeitpunkt, zu dem der Selektor (28) den zweiten Betriebsmodus wählt, wobei die Druckvorrichtung (2) veranlaßt wird, in den ersten Zustand zu schalten, nachdem die zweite Zeitspanne abgelaufen ist.

7. Vorrichtung nach einem der Ansprüche 4 bis 6, ferner umfassend eine Einrichtung zur Veranlassung der Druckvorrichtung (2), als Antwort auf einen von der Hostvorrichtung (1) empfangenen Befehl in den ersten Zustand zu schalten, nachdem die erste Zeitspanne abgelaufen ist.

8. Vorrichtung nach einem der Ansprüche 1 bis 7, bei dem die mehreren Steuermodi einen dritten Steuermodus umfassen zur Veranlassung der Druckvorrichtung (2) von dem ersten Zustand zu dem zweiten Zustand zu schalten, wobei der Funktionsselektor (28) ausgebildet ist, den dritten Steuermodus zu wählen, während die Druckvorrichtung (2) druckt.

9. Vorrichtung nach Anspruch 8, ferner umfassend eine Stoppeinrichtung zum Stoppen des Druckvorgangs als Antwort auf die sich im dritten Steuermodus befindende Steuervorrichtung (14, 28).

10. Vorrichtung nach Anspruch 9, bei der die mehreren Steuermodi einen vierten Steuermodus umfassen, der vierte Steuermodus dazu dient, die Druckvorrichtung (2) zur Wiederaufnahme des gestoppten Druckvorgangs zu veranlassen, wobei der Funktionsselektor (28) ausgebildet ist, den vierten Steuermodus als Antwort auf das Stoppen des Druckvorgangs auszuwählen.

11. Vorrichtung nach Anspruch 10, ferner umfassend einen dritten Zeitgeber zur Messung einer dritten Zeitspanne von dem Zeitpunkt, zu dem der Funktionsselektor (28) den vierten Steuermodus wählt, und
eine Fehlerausgabeeinrichtung zur Anzeige eines Fehlers, wenn der dritte Zeitgeber abläuft, bevor die Steuervorrichtung betätigt wird, nachdem der vierte Steuermodus ausgewähit wurde.

12. Vorrichtung nach einem der vorhergehenden Ansprüche, bei dem die mehreren Steuermodi einen fünften Steuermodus umfassen, der fünfte Steuermodus dazu dient, die Druckvorrichtung (2) zu veranlassen, von dem ersten Zustand zu dem zweiten Zustand zu schalten, wobei der Funktionsselektor (28) ausgebildet ist, den fünften Steuermodus zu wählen, wenn keine unverarbeiteten Daten von der Hostvorrichtung (1) in der Druckvorrichtung (2) übrig sind.

13. Vorrichtung nach Anspruch 12, bei der der Funktionsselektor (28) ausgebildet ist, den ersten Steuermodus als Antwort darauf zu wählen, daß die Druckvorrichtung zu dem zweiten Zustand schaltet, wobei die Druckvorrichtung weiterhin einen vierten Zeitgeber zur Messung einer vierten Zeitspanne von dem Zeitpunkt umfaßt, zu dem die Steuervorrichtung (14, 28) betätigt wird, während sie sich um fünften Steuermodus befindet, wobei die Druckvorrichtung (2) gesteuert wird, von dem zweiten Zustand in den ersten Zustand zu schalten, nachdem der vierte Zeitgeber abgelaufen ist.

14. Vorrichtung nach einem der vorhergehenden Ansprüche, ferner umfassend eine Anzeigeeinrichtung zur Anzeige des momentanen Zustands der Druckvorrichtung (2) und des momentanen Steuermodus der Steuervorrichtung (14, 28).

15. Verfahren der Steuerung der Druckvorrichtung, die in einem der vorhergehenden Ansprüche definiert ist, wobei das Verfahren umfaßt:
(a) Erfassen des Aufbrauchs oder der Abwesenheit und der Wiederauffüllung oder Anwesenheit von Verbrauchsmaterialien (10) in der Druckvorrichtung (2),
(b) Veranlassen der Druckvorrichtung (2), als Antwort auf das Erfassen des Aufbrauchs oder der Abwesenheit eines oder mehrerer der Verbrauchsmaterialien (10), in den zweiten Zustand einzutreten,
(c) Erfassen, nachfolgend zum Schritt (b), der Wiederauffüllung oder Anwesenheit von Verbrauchsmaterialien (10), und
(d) Auswählen des zweiten Steuermodus der Steuervorrichtung (14, 28) als Reaktion auf Schritt (c).

16. Verfahren nach Anspruch 15, bei dem Schritt (d) umfaßt:
(d1) Messen einer ersten Zeitspanne als Antwort auf das Erfassen im Schritt (c),
(d2) Auswählen des ersten Steuermodus, während die erste Zeitspanne gemessen wird, und
(d3) Auswählen des zweiten Steuermodus, nachdem die erste Zeitspanne abgelaufen ist.

17. Verfahren nach Anspruch 16, bei dem das Auswählen in Schritt (d3) verzögert wird, wann immer die Steuervorrichtung (14, 28) betätigt wird, bevor die erste Zeitspanne abgelaufen ist.

18. Verfahren nach einem der Ansprüche 15 bis 17, ferner umfassend
(e) Messen einer zweiten Zeitspanne als Antwort auf das Erfassen im Schritt (c), und
(f) Schalten der Druckvorrichtung (2) in den ersten Zustand, wenn die zweite Zeitspanne abläuft.

19. Verfahren nach einem der Ansprüche 15 bis 18, ferner umfassend
(g) Schalten der Druckvorrichtung (2) in den ersten Zustand als Antwort auf einen von der Hostvorrichtung (1) empfangenen Befehl, nachdem der zweite Steuermodus im Schritt (d) ausgewählt wurde.

20. Steuerverfahren nach einem der Ansprüche 15 bis 19, ferner umfassend
(h) Schalten der Druckvorrichtung (2) von dem ersten Zustand in den zweiten, wenn die Steuervorrichtung (14, 28) betätigt wird, während die Druckvorrichtung (2) druckt,
(i) Stoppen des Druckvorgangs als Antwort auf das Schalten in Schritt (h), und
(j) Wiederaufnehmen des Druckvorgangs, wenn die Steuervorrichtung (14, 28) nachfolgend auf Schritt (i) betätigt wird.

## Revendications

1. Dispositif d'impression pour imprimer des données reçues depuis un dispositif hôte (1), le dispositif d'impression (2) étant configuré pour passer de manière sélective d'un premier état dans lequel le dispositif d'impression (2) est prêt à imprimer les données à un deuxième état dans lequel le dispositif d'impression (2) n'est pas prêt à imprimer les données et inversement, et à signaler au dispositif hôte (1) l'état actuellement sélectionné, le dispositif d'impression (2) comprenant :
un ou plusieurs détecteurs (28, 29, 129) destinés à détecter l'épuisement ou l'absence et le réapprovisionnement ou la présence d'une ou plusieurs matières consommables (10) consommées lors de l'impression des données et à provoquer le passage du dispositif d'impression (2) au deuxième état en réponse à la détection de l'épuisement ou de l'absence d'une ou plusieurs matières consommables (10),
un dispositif de commande (14, 28) incluant une touche de fonction (14) qui peut être actionnée manuellement pour obliger le dispositif d'impression (2) à exécuter une fonction primaire ou une fonction secondaire, dans lequel l'un des multiples modes de commande est attribué de manière sélective à la touche de fonction, les modes de commande comprenant un premier mode destiné à obliger le dispositif d'impression (2) à exécuter la fonction primaire et un deuxième mode destiné à obliger le dispositif d'impression (2) à exécuter la fonction secondaire pour passer du deuxième état au premier état, et
un sélecteur de fonction (28) destiné à sélectionner le deuxième mode de commande en réponse à un ou plusieurs détecteurs (28, 29, 129) détectant le réapprovisionnement ou la présence d'une ou plusieurs matières consommables après qu'un ou plusieurs détecteurs (28, 29, 129) ont provoqué le passage du dispositif d'impression (2) au deuxième état.

2. Dispositif selon la revendication 1, dans lequel lesdites une ou plusieurs matières consommables (10) comprennent un rouleau de papier, les détecteurs (28, 29) comprennent un capteur (29) destiné à détecter la fin du rouleau de papier et la fonction primaire est un transport du papier à partir du rouleau de papier.

3. Dispositif selon la revendication 1 ou 2, dans lequel lesdites une ou plusieurs matières consommables (10) comprennent de l'encre dans une cartouche d'encre (118), les détecteurs comprennent un capteur (28, 129) d'encre restante et la fonction primaire est une opération de régénération de la tête d'encrage.

4. Dispositif selon l'une quelconque des revendications 1 à 3, comprenant en outre une première minuterie pour mesurer une première durée à partir du moment où le réapprovisionnement ou la présence d'une matière consommable est détecté par l'un des détecteurs (29, 129) après le passage du dispositif d'impression au deuxième état, dans lequel le sélecteur de fonction (28) est adapté pour sélectionner le premier mode de commande durant la première durée et pour sélectionner le deuxième mode de commande lorsque la durée de la première minuterie est écoulée.

5. Dispositif selon la revendication 4, comprenant en outre un moyen pour retarder le moment auquel le sélecteur de fonction (28) sélectionne le deuxième mode de commande chaque fois que le dispositif de commande (14, 28) est activé pendant la première durée.

6. Dispositif selon l'une quelconque des revendications 1 à 5, comprenant en outre une deuxième minuterie pour mesurer une deuxième durée à partir du moment où le deuxième mode de commande est sélectionné par le sélecteur (28), dans lequel le dispositif d'impression (2) est obligé de passer au premier état après l'écoulement de la durée de la deuxième minuterie.

7. Dispositif selon 0l'une quelconque des revendications 4 à 6, comprenant en outre un moyen pour obliger le dispositif d'impression (2) à passer au premier état en réponse à une commande reçue depuis le dispositif hôte (1) après l'écoulement de la durée de la première minuterie.

8. Dispositif selon l'une quelconque des revendications 1 à 7, dans lequel les multiples modes de commande incluent un troisième mode de commande obligeant le dispositif d'impression (2) à passer du premier état au deuxième état, dans lequel le sélecteur de fonction (28) est adapté pour sélectionner le troisième mode de commande lorsque le dispositif d'impression (2) imprime.

9. Dispositif selon la revendication 8, comprenant en outre un moyen d'arrêt pour arrêter l'impression en réponse à une activation du dispositif de commande (14, 28) se trouvant dans le troisième mode de commande.

10. Dispositif selon la revendication 9, dans lequel les multiples modes de commande incluent un quatrième mode de commande, le quatrième mode de commande obligeant le dispositif d'impression (2) à reprendre l'impression arrêtée, dans lequel le sélecteur de fonction (28) est adapté pour sélectionner le quatrième mode de commande en réponse à l'arrêt de l'impression.

11. Dispositif selon la revendication 10, comprenant en outre une troisième minuterie pour mesurer une troisième durée à partir du moment où le sélecteur de fonction (28) sélectionne le quatrième mode de commande, et
un moyen de signalisation d'erreur pour signaler une erreur quand la durée de la troisième minuterie est écoulée avant que le dispositif de commande soit activé après que le quatrième mode de commande a été sélectionné.

12. Dispositif selon l'une quelconque des revendications précédentes, dans lequel les multiples modes de commande incluent un cinquième mode de commande, le cinquième mode de commande obligeant le dispositif d'impression (2) à passer du premier état au deuxième état, dans lequel le sélecteur de fonction (28) est adapté pour sélectionner le cinquième mode de commande lorsque le dispositif d'impression (2) ne contient plus aucune données non traitées provenant du dispositif hôte (1).

13. Dispositif selon la revendication 12, dans lequel le sélecteur de fonction (28) est adapté pour sélectionner le premier mode de commande en réponse au passage du dispositif d'impression (2) au deuxième état et le dispositif d'impression comprend en outre une quatrième minuterie pour mesurer une quatrième durée à partir du moment où le dispositif de commande (14, 28) est activé alors qu'il se trouve dans le cinquième mode de commande, dans lequel le dispositif d'impression (2) est commandé de façon à passer du deuxième mode de commande au premier mode de commande après l'écoulement de la durée de la quatrième minuterie.

14. Dispositif selon l'une quelconque des revendications précédentes, comprenant en outre un moyen d'affichage pour afficher l'état actuel du dispositif d'impression (2); et le mode actuel de commande du dispositif de commande (14, 28).

15. Procédé de commande du dispositif d'impression défini dans l'une quelconque des revendications précédentes, le procédé comprenant les étapes consistant à :
(a) détecter l'épuisement ou l'absence et le réapprovisionnement ou la présence de matières consommables (10) dans le dispositif d'impression (2),
(b) obliger le dispositif d'impression (2) à passer au deuxième état en réponse à la détection de l'épuisement ou de l'absence d'une ou plusieurs matières consommables (10),
(c) détecter, après l'étape (b), le réapprovisionnement ou la présence de matières consommables (10), et
(d) sélectionner le deuxième mode de commande du dispositif de commande (14, 28) en réponse à l'étape (c).

16. Procédé selon la revendication 15, dans lequel l'étape (d) comprend les étapes consistant à :
(d1) mesurer une première durée en réponse à la détection exécutée à l'étape (c),
(d2) sélectionner le premier mode de commande pendant que la première durée est mesurée, et
(d3) sélectionner le deuxième mode de commande après que la première durée est écoulée.

17. Procédé selon la revendication 16, dans lequel la sélection exécutée à l'étape (d3) est retardée chaque fois que le dispositif de commande (14, 28) est activé avant l'écoulement de la première durée.

18. Procédé selon l'une quelconque des revendications 15 à 17, comprenant en outre les étapes consistant à :
(e) mesurer une deuxième durée en réponse à la détection exécutée à l'étape (c), et
(f) commuter le dispositif d'impression (2) sur le premier état quand la deuxième durée est écoulée.

19. Procédé selon l'une quelconque des revendications 15 à 18, comprenant en outre l'étape consistant à :
(g) commuter le dispositif d'impression (2) sur le premier état en réponse à une commande reçue depuis le dispositif hôte (1) après la sélection du deuxième mode de commande à l'étape (d).

20. Procédé de commande selon l'une quelconque des revendications 15 à 19, comprenant en outre les étapes consistant à :
(h) commuter le dispositif d'impression (2) du premier état au deuxième état quand le dispositif de commande (14, 28) est activé lorsque le dispositif d'impression (2) imprime,
(i) arrêter l'impression en réponse à la commutation exécutée à l'étape (h), et
(j) reprendre l'impression quand le dispositif de commande (14, 28) est activé après l'étape (i).
